# EUROPÄISCHE PATENTSCHRIFT

(11) **EP 3 991 893 B1**
(45) Veröffentlichungstag und Bekanntmachung des Hinweises auf die Patenterteilung: **31.05.2023**
(21) Anmeldenummer: 20205489.6
(22) Anmeldetag: 03.11.2020
(51) Int. Cl.: B23B 31/20, B23Q 3/12

(54) **SPANNSYSTEM MIT SPINDEL UND WERKSTÜCKHALTER SOWIE VERFAHREN ZUR KOPPLUNG DES SPANNSYSTEMS**
CLAMPING SYSTEM WITH SPINDLE AND WORKPIECE HOLDER AND METHOD FOR COUPLING THE CLAMPING SYSTEM
SYSTÈME DE SERRAGE POURVU DE BROCHE ET DE PORTE-PIÈCES AINSI QUE PROCÉDÉ DE COUPLAGE DU SYSTÈME DE SERRAGE

(43) Veröffentlichungstag der Anmeldung: 04.05.2022
(73) Patentinhaber: Hainbuch GmbH Spannende Technik, 71672 Marbach (DE)
(72) Erfinder: Kowarsch, Jan, 71729 Erdmannhausen (DE); Weller, Hans-Michael, 71672 Marbach (DE)
(74) Vertreter: Witte, Weller und Partner Patentanwälte mbB Stuttgart

(56) Entgegenhaltungen:
- WO-A1-88/07904
- DE-A1- 3 820 871
- US-A- 2 494 764
- US-A1- 2006 097 463

## Beschreibung

### ANWENDUNGSGEBIET UND STAND DER TECHNIK

Die Erfindung betrifft ein Spannsystem mit einer Spindel und einem Werkstückhalter, insbesondere zur rotativen Bearbeitung eines durch den Werkstückhalter gehaltenen Werkstücks.

Der Werkstückhalter eines solchen Spannsystems weist einen Aufnahmebereich zur Aufnahme eines Werkstücks auf. Üblicherweise ist mindestens ein bewegliches Klemmelement vorgesehen, mittels dessen das Werkstück im Aufnahmebereich eingespannt werden kann. Insbesondere ist eine Mehrzahl von Klemmbacken zum Einspannen des Werkstücks vorgesehen. Die Spindel eines gattungsgemäßen Spannsystems ist zur Anbringung des Werkstückhalters vorgesehen, insbesondere um das Werkstück in eine rotative Bewegung zu versetzen, in der die Bearbeitung stattfindet.

Die Spindel und der Werkstückhalter verfügen über aufeinander zu gerichtete Anlageflächen, die im befestigten Zustand des Werkstückhalters aneinander anliegen und die ein in die Spindel eingekoppeltes Drehmoment auf den Werkstückhalter und das dort eingespannte Werkstück übertragen.

Derartige Spannsysteme sind dafür vorgesehen, im betrieblichen Alltag der Fertigung häufig gewechseltzu werden. Werkstückhalter werden je nach Bedarf bei der Fertigung an Spindeln angekoppelt und nach Verwendung wieder von diesen gelöst. Es ist daher erforderlich, derartige Wechsel möglichst schnell und problemlos durchführen zu können und bei Kopplung eine präzise Positionierung des Werkzeughalters an der Spindel gewährleisten zu können.

Aus der DE 102009024481 A1 ist bereits ein Schnellwechselmechanismus bekannt, um ein Spannzeug an einer Spindel zu befestigen. Das Dokument schlägt zu diesem Zweck eine Bajonettverbindung vor. Auch aus der DE 3820871 A1 ist ein ein Spannsystem gemäß dem Oberbegriff des Anspruchs 1 bekannt.

Die bekannten Wechselmechanismen erfüllen jedoch nicht alle Anforderungen in Hinblick auf preisgünstige Herstellung, hohen Anpressdruck des Werkstückhalters an die Spindel und insbesondere Unempfindlichkeit gegen Verschmutzung.

### AUFGABE UND LÖSUNG

Aufgabe der Erfindung ist es, eine verbessertes Spannsystems zur Verfügung zu stellen, welches bei einfachem Aufbau eine sichere Verbindung zwischen Werkstückhalter und Spindel gewährleistet und dabei gegen Verschmutzungen unempfindlich ist.

Zur Lösung dieser Aufgabe wird erfindungsgemäß ein Spannsystem mit den Merkmalen des Anspruchs 1 vorgeschlagen.

Bevorzugt ist es, wenn die beiden Gewindeabschnitte jeweils beide Innengewinde oder beide Außengewinde sind, die mit korrespondierenden Außengewinden oder Innengewinden im Eingriff stehen. Es ist aber auch eine Bauform denkbar, bei der einer der Gewindeabschnitte als Außengewinde und einer der Gewindeabschnitte als Innengewinde ausgebildet ist.

Die Differenzgewindehülse ist gegenüber den Anlageflächen und den Gegengewinden an der Spindel und am Werkstückhalter, insbesondere gegenüber einem Anschlussring an der Spindel, an dem die spindelseitige Anlagefläche vorgesehen ist, und gegenüber einem Spannfutter am Werkstückhalter, an dem die werkstückhalterseitige Anlagefläche vorgesehen ist, um eine Hauptachse, die üblicherweise der Drehachse der Spindel entspricht, drehbar. Die Drehbewegung der Differenzgewindehülse bewirkt, dass diese in axialer Richtung, also in Richtung der Hauptachse, gegenüber beiden Gegengewinden verlagert wird, jedoch in unterschiedlichem Maße. Die Differenz führt dazu, dass mittels der Drehbewegung der Werkstückhalter an die Spindel angezogen werden kann.

Der Vorteil gegenüber einer Gewindehülse, die rein rotativ am Werkstückhalter oder an der Spindel befestigt ist und sich lediglich mittels eines Gewindeabschnitts mit einem Gegengewinde an der Spindel bzw. am Werkstückhalter im Eingriff befindet, liegt darin, dass sich durch das Differenzgewinde mit zwei Gewindeabschnitten eine geringe Gewindesteigung realisieren lässt, ohne dass dies mit sehr feinen Gewindegängen einhergeht. So geht beispielsweise eine Gewindesteigung von 0,5 mm bei der Verwendung nur eines Gewindeabschnitts und eines Gegengewindes zwingend mit sehr feinen Gewindegängen einher, die in der Praxis der industriellen Fertigung Gefahr liefen, durch Verschmutzung ein Ankoppeln des Werkstückhalters zu verhindern. Auch wäre ein derart feines Gewinde gefährdet, leicht beschädigt zu werden. Die Verwendung eines einzelnen Gewindes mit einer größeren Steigung und damit robusteren Gewindegängen wäre allerdings von Nachteil, da es ein höheres Kopplungsmoment bedingen würde, um eine definierte Anpresskraft zwischen Spindel und Werkstückhalter zu bewirken.

Die Differenzgewindehülse gestattet es, durch die Wahl einer Gewindesteigung von beispielsweise 5 mm an einem der Gewindeabschnitte und 5,5 mm am anderen Gewindeabschnitt faktisch eine Gewindewirkung mit einer Gewindesteigung von 0,5 mm zu bewirken, dies jedoch mit erheblich robusteren und weniger verschmutzungsgefährdeten Gewindegängen zu erzielen.

Von der Erfindung umfasst ist auch das mit einem solchen Spannsystem mögliche Vorgehen zur Kopplung des Spannsystems. Hierbei wird der Werkstückhalter in Richtung einer Haupterstreckungsrichtung auf die Spindel heranbewegt. In geeigneter Relativstellung wird dann die Differenzgewindehülse gegenüber Anlageflächen der Spindel und des Werkstückhalters verdreht, um die Anlagenflächen aneinander anzupressen.

Von besonderem Vorteil kann es sein, wenn das Verdrehen der Differenzgewindehülse erfolgt, während der Werkstückhalter mittels eines Kraftübertragungsorgan wie einer Zugstange an die Spindel angepresst wird. Insbesondere können sowohl die hierfür erforderliche Zugkraft als auch das auf die Differenzgewindehülse wirkende Kopplungsmoment durch das Kraftübertragungsorgan, insbesondere eine Zugstange, aufgebracht werden.

Die Differenzgewindehülse kann zum Verbleib an der Spindel oder am Werkstückhalter vorgesehen sein. Bevorzugt ist dabei der Verbleib an der Spindel. Wenn im Falle einer solchen Gestaltung also der Werkstückhalter von der Spindel entfernt wird, so verbleibt die Differenzgewindehülse an der Spindel.

Wird ein Werkstückhalter an eine Spindel angekoppelt, so würde es den Ankoppelvorgang deutlich erschweren, wenn die Differenzgewindehülse mit ihrem zu diesem Zeitpunkt noch nicht im Eingriff mit ihrem Gegengewinde befindlichen Gewindeabschnitt vollständig vom Ende des Gegengewindes aus eingeschraubt werden müsste. Eine solche Gestaltung ist zwar möglich und von der Erfindung umfasst, meist aber nachteilig.

Es wird als vorteilhaft angesehen, wenn stattdessen eines der Gegengewinde, insbesondere das erste Gegengewinde, sowie einer der Gewindeabschnitte, insbesondere der erste Gewindeabschnitt, als Bajonettgewinde ausgebildetsind. Dies bedeutet, dass die betreffenden Gewinde jeweils mindestens einen gewindeganglosen Winkelbereich aufweisen.

Die gewindelosen Winkelbereiche gestatten es durch komplementäre Anordnung, die betreffenden Gewinde zunächst ineinanderzuschieben, ohne dass die jeweiligen Gewindegänge bereits in Eingriff miteinander gelangen. Erst nach dem Ineinanderschieben der Gewinde erfolgt eine Relativdrehung des jeweiligen Gewindeabschnitts sowie des Gegengewindes, so dass die Gewindegänge in Eingriff miteinander gelangen und die fortgesetzte Relativdrehung die Spindel, insbesondere deren Anschlussring, und den Werkstückhalter, insbesondere dessen Spannfutter, aneinander anpresst.

Insbesondere bei einer solchen Gestaltung eines der Gewindeabschnitte sowie des zugehörigen Gegengewindes mit gewindelosen Winkelbereichen kann es schwierig sein, die Gewindegänge in Eingriff miteinander zu bringen. Dadurch, dass die Gewindegänge jeweils mit einen geweiteten Einführungsbereich versehen werden, kann dem begegnet werden.

Alternativ ist es auch möglich, mindestens eines der Gegengewinde der Spindel und/oder des Werkstückhalters verschieblich zur Anlagefläche der Spindel bzw. des Werkstückhalters auszubilden. Dieses verschiebliche Gegengewinde erleichtert es, den Gewindeabschnitt und das Gegengewinde in Eingriff zu bringen.

Eine mögliche Bauform eines verschieblichen Gegengewindes sieht vor, dass das betreffende Gegengewinde an einem Gewindering vorgesehen ist, der an der Spindel begrenzt beweglich gegenüber der Anlagefläche der Spindel bzw. die am Werkstückhalter begrenzt beweglich gegenüber der Anlagefläche des Werkstückhalters vorgesehen ist. Ein solcher Gewindering ist durch zwei Anschlagsflächen an der Spindel, insbesondere an einem Anschlussring der Spindel, oder am Werkstückhalter, insbesondere an einem Spannfutter des Werkstückhalters, unverlierbar an diesem angebracht. Der Gewindering ist an der entsprechenden Einheit, also an der Spindel und insbesondere deren Anschlussring oder am Werkstückhalter und insbesondere dessen Spannfutter in Richtung der Hauptachse verschieblich, jedoch drehgesichert. Der Gewindering ist vorzugsweise mittels einer Feder in Richtung einer Endlage, vorzugsweise in Richtung des Wertstückhalters weisend, kraftbeaufschlagt.

Bei einem gattungsgemäßen Spannsystem und vorzugsweise auch bei einem erfindungsgemäßen Spannsystem ist der Werkstückhalter mit mindestens einem Klemmelement ausgestattet, welches gegenüber der Anlagefläche des Werkstückhalters verlagerbar ist und somit in der Lage ist, das Werkstück einzuspannen. Vorzugsweise handelt es sich nicht um ein einzelnes Klemmelement, sondern um eine Mehrzahl von gegenüber der Anlagefläche und gegeneinander beweglichen Klemmelementen, insbesondere um eine Mehrzahl von Spannbacken, die umfänglich um den Aufnahmebereich für das Werkstück angeordnet sind und radial zum Aufnahmebereich gegeneinander beweglich sind. Vorzugsweise handelt es sich um drei oder vier solcher Spannbacken. Weiterhin vorzugsweise sind die Spannbacken miteinander durch elastische Verbindungsabschnitte verbunden und bilden gemeinsam einen Spannbackenring.

Zum Zweck der Bewegung des mindestens einen Klemmelements und insbesondere der beschriebenen Mehrzahl von Spannbacken ist vorzugsweise ein gemeinsames Krafteinkopplungsglied vorgesehen. An diesem sind die Klemmelemente vorzugsweise bezogen auf die Hauptachse formschlüssig befestigt. Das Krafteinkopplungsglied ist zum Zwecke des Einspannens eines Werkstücks in Richtung der Hauptachse axial beweglich. Die Kraft zum Bewegen des Krafteinkopplungsgliedes wird vorzugsweise mittels eines an der Spindel vorgesehen Kraftübertragungsorgans wie einem Zugrohr bereitgestellt. Die axiale Verlagerung bewirkt durch schräge oder konische Flächen eine Spannbewegung oder Lösebewegung des mindestens einen Klemmelements orthogonal zur Hauptachse.

Zur Ankopplung an dieses spindelseitige Kraftübertragungsorgan weist das Krafteinkopplungsglied vorzugsweise auf seinerzur Spindel hin weisenden Seite eine Bajonettkupplung auf. Korrespondierend hierzu istauch an einem spindelseitigen Kopplungsglied, welches auch direkt durch das distale Ende des Kraftübertragungsorgans gebildet sein kann, eine Bajonettkupplungvorgesehen.

Beim Anbringen des Werkstückhalters an der Spindel kommt es bei einer solchen Gestaltungzu zwei Kopplungsvorgängen. Einerseits werden über die Differenzgewindehülse die jeweiligen Gehäuse miteinander verbunden, insbesondere ein Anschlussring der Spindel und ein Spannfutter des Werkstückhalters. Andererseits werden das werkzeughalterseitige Krafteinkopplungsglied und das spindelseitige Kraftübertragungsorgan gekoppelt.

Vorzugsweise erfolgen diese Kopplungsvorgänge gleichzeitig, indem die Differenzgewindehülse über die genannten Bajonettgewinde gekoppelt wird und das Krafteinkopplungsglied und das Kraftübertragungsorgan über die Bajonettkupplungen gekoppelt werden. Die Bajonettkupplungen sind auf die Bajonettgewinde dahingehend abgestimmt, dass in einer Kopplungsausrichtung des Werkstückhalters dieser an die Spindel ansetzbar ist, wobei gleichzeitig die Bajonettgewinde und die Bajonettkupplungen in Eingriff miteinander gelangen können.

Beim Ansetzen des Werkstückhalters an die Spindel werden die beschriebenen Bajonette axial gefügt, so dass anschließend durch Relativdrehung des Werkstückhalters gegenüber der Spindel um die Haupterstreckungsrichtungdie mindestes eine Bajonettkupplung und/oder die mindestens zwei Bajonettgewinde in Eingriff gebracht werden.

Vorzugsweise ist das spindelseitige Kopplungsglied drehfest, jedoch axial beweglich, mit der Gewindehülse verbunden. Ein Drehmoment, um die Differenzgewindehülse gegenüber den Gegengewinden zu drehen und somit den Werkstückhalter an die Spindel anzuziehen, kann somit in das Kopplungsglied eingebracht werden.

Dies erlaubt verschiedene Arten der Einbringung des Kopplungsmoments zum Drehen der Differenzgewindehülse.

Zum einen kann das Kopplungsglied drehfest mit einem Kraftübertragungsorgan der Spindel verbunden sein. Das Kraftübertragungsorgan, welches im Betrieb das Einspannen und Lösen des Werkstücks durch translative Bewegung bewirkt, kann bei einer solchen Gestaltung beim Ankoppeln des Werkstückhalters durch rotative Bewegung dieser Kopplung dienen. Das Kraftübertragungsorgan dreht die Differenzgewindehülse und zieht damit den Werkstückhalter an die Spindel an.

Die Drehkopplung zwischen Differenzgewindehülse und Kopplungsglied kann weiterhin genutzt werden, um ein Kopplungsmoment von der Seite des Werkstückhalters einzubringen. Bei einer solchen Gestaltung ist das Kopplungsglied vorzugsweise drehbar mit einem Kraftübertragungsorgan der Spindel verbunden, so dass nur axiale Kräfte, nicht aber Drehmomente übertragen werden.

Zur Einbringung eines Drehmoments in das Kopplungsglied weist dieses vorzugsweise eine hierfür geeignete unrunde Kontur, insbesondere einen Innensechskant, auf. Somit kann mittels eines Sechskantwerkzeugs von der Werkstückhalterseite aus und insbesondere durch den Aufnahmebereich hindurch das Kopplungsglied und mittelbar die Differenzgewindehülse gegenüber der Spindel und/oder dem Werkstückhalter verdreht werden.

Das Einkoppeln eines Kopplungsmoments über das genannte Kopplungsglied ist nur eine von mehreren Möglichkeiten. Wird das Kopplungsglied hierfür nicht genutzt, so kann die Drehkopplung zur Differenzgewindehülse entfallen.

Eine alternative Möglichkeit sieht vor, dass die Differenzgewindehülse über eine Verzahnung verfügt, die mit einem Zahnrad, insbesondere einem Kegelrad, oder mit einer Schnecke eines separaten Spanngliedes in Eingriff steht. Dieses separate Spannglied kann insbesondere eine tangential oder radial ausgerichtete Drehachse aufweisen und insbesondere an einem Anschlussring der Spindel oder einem Spannfutter des Werkstückhalters gelagert sein. Das Spannglied ist vorzugsweise von au-ßen zum Spannen zugänglich. Es kann insbesondere ein Außen- oder Innensechskantzum Ansetzen eines entsprechenden Werkzeugs aufweisen, mittels dessen dann ein Kopplungsmoment in die Differenzgewindehülse eingekoppelt werden kann.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
Fig. 1A bis 4 zeigen ein erstes Ausführungsbeispiel eines erfindungsgemäßen Spannsystems.
Fig. 5A bis 5C zeigen den Vorgang der Anbringung des Werkstückhalters an der Spindel des Spannsystems der Fig. 1 bis 4.
Fig. 6 zeigt ein zweites Ausführungsbeispiel eines erfindungsgemäßen Spannsystems.
Fig. 7 zeigt ein drittes Ausführungsbeispiel eines erfindungsgemäßen Spannsystems.
Fig. 8 zeigt ein viertes Ausführungsbeispiel eines erfindungsgemäßen Spannsystems.

### DETAILLIERTE BESCHREIBUNG DER AUSFÜHRUNGSBEISPIELE

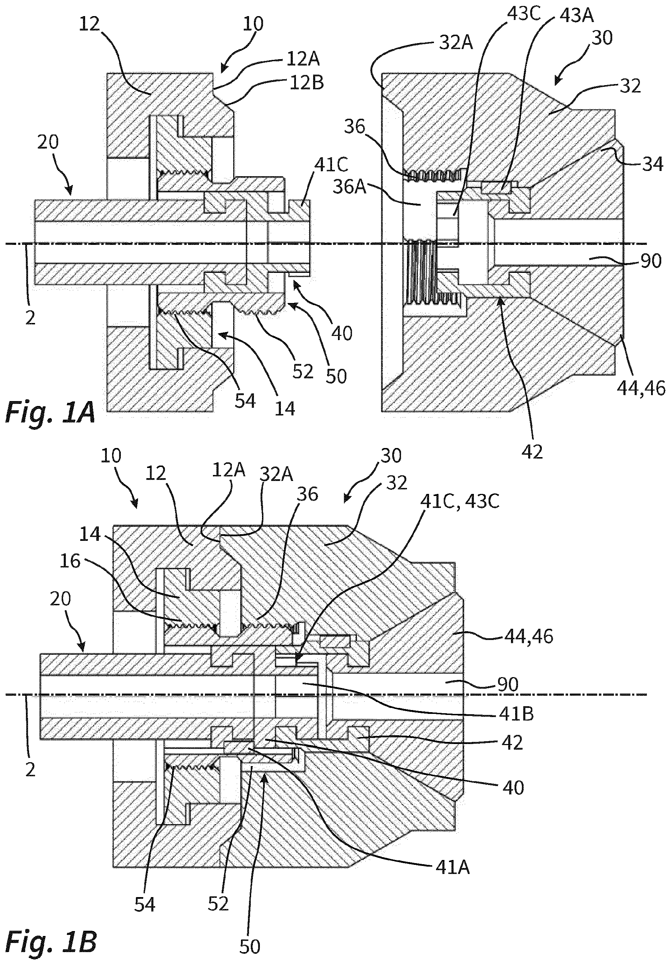

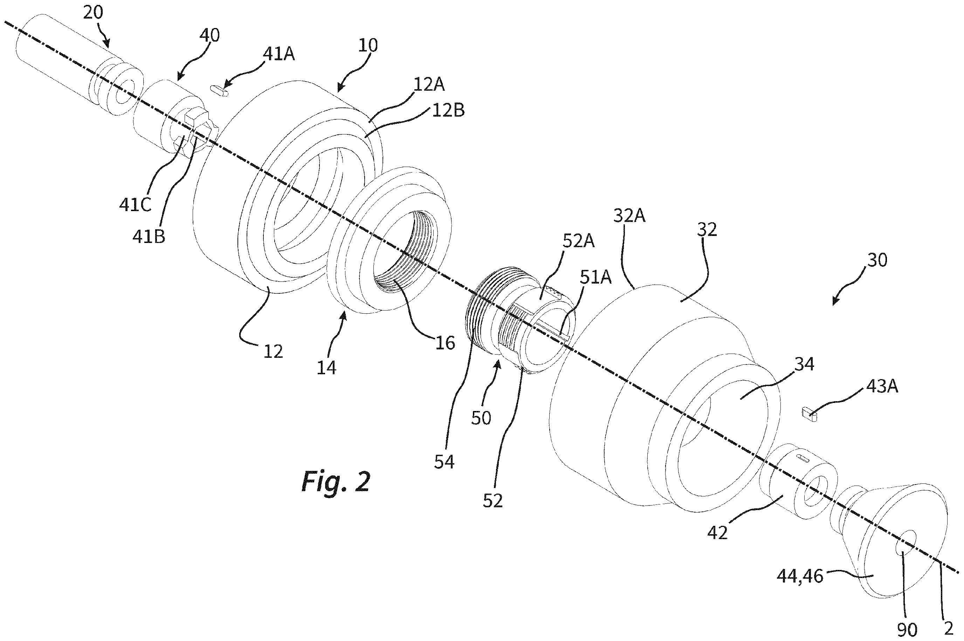

Fig. 1A, 1B und 2 zeigen ein erstes erfindungsgemäßes Spannsystem. Dieses verfügt über eine Spindel 10 sowie einen Werkstückhalter 30, der zur Befestigung an der Spindel 10 vorgesehen ist.

Die Spindel 10 verfügt über einen Anschlussring 12, der mit einer zentrischen Durchbrechung versehen ist, in der ein Zugrohr 20 als Kraftübertragungsorgan 20 angeordnet ist. Das Zugrohr 20 ist gegenüber dem Anschlussring 12 in Haupterstreckungsrichtung 2 verlagerbar, um hierdurch ein am Werkstückhalter 30 angeordnetes Werkstück spannen und lösen zu können. Am distalen Ende des Zugrohres 20, in den Fig. 1A und 1B somit auf der rechten Seite, ist ein Kopplungsglied 40 in Form eines Koppelrings 40 vorgesehen, der mit dem Zugrohr 20 axial verbunden ist, gegenüber dem Zugrohr 20 aber drehbar verbleibt.

Das Zugrohr 20 ist von einer Gewindehülse 50 umgeben, die als Differenzgewindehülse 50 ausgebildet ist, indem sie über zwei Gewinde 52, 54 mit unterschiedlicher Gewindesteigung verfügt. Diese Gewinde 52, 54 sind im Falle des Ausführungsbeispiels als Außengewinde gestaltet. Das proximale Gewinde 54 ist zur spindelseitigen Kopplung vorgesehen und steht im Eingriff mit einem Gewindering 14, der durch beidseitige Anschlagflächen begrenzt gegenüber dem Anschlussring 12 axial verlagerbar ist. Die Differenzgewindehülse 50 ist mittels eines Nutensteins 41A drehfest mit dem Koppelring 40 ausgebildet. Der Koppelring 40 ist jedoch aufgrund der Formgebung der entsprechenden Nut 51A in axialer Richtung gegenüber der Differenzgewindehülse 50 beweglich.

Der Werkstückhalter 30 verfügt über ein Spannfutter 32, welches am proximalen Ende über eine Anlagefläche 32A zur Anlage an einer spindelseitigen Anlagefläche 12A verfügt. Weiterhin weist das Spannfutter 32 ein Innengewinde 36 auf, welches für den Eingriff des Außengewindes 52 der Differenzgewindehülse 50 vorgesehen ist.

Am distalen Ende der Spannfutter 32 ist ein konischer Spannbereich 34 vorgesehen. In diesem Spannbereich 34 ist ein Spannbackenring 44 vorgesehen, der in den Figuren als einheitliches Bauteil dargestellt ist, jedoch stellvertretend für eine Mehrzahl von umfänglich verteilten Klemmelementen 46 in Form von Spannbacken 46 steht, die jeweils Segmente des Spannbackenrings 44 bilden und untereinander durch radiale Elastomerabschnitte verbunden sind. Die Spannbacken 46 sind aufgrund ihrer beweglichen Befestigung aneinander in radialer Richtung verlagerbar. Außenseitig weist der Spannbackenring 44 eine konische Kontaktfläche auf, die am konischen Spannbereich 34 des Spannfutters anliegt. Durch axiale Verlagerung des Spannbackenrings 44 in proximaler Richtung kann daher die radiale Verlagerung der Spannbacken 46 aufeinander zu bewirkt werden, so dass hierdurch ein Werkstück in einem Aufnahmebereich 90 eingespannt werden kann.

Der Spannbackenring 44 ist in einem Krafteinkopplungsglied 42 in Form einer Kupplungshülse 42 fixiert, so dass die Spannbacken 46 durch eine proximale Zugkraft auf die Kupplungshülse 42 gespannt werden können. Diese Kopplungshülse 42 ist mittels eines Nutensteins 43A drehfest mit dem Spannfutter 32 verbunden, jedoch aufgrund der Längserstreckung der entsprechenden Nut 33A am Spannfutter in Haupterstreckungsrichtung 2 gegenüber dem Spannfutter 32 beweglich.

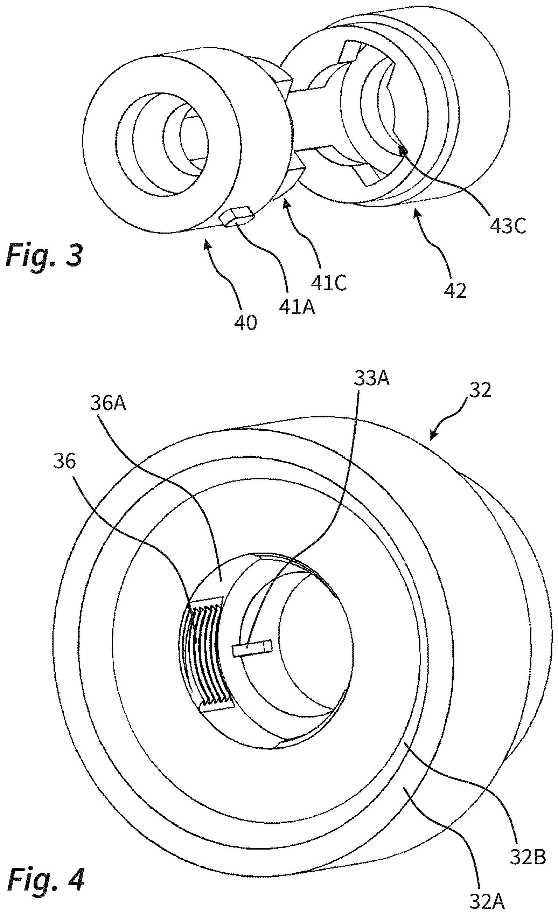

Fig. 2 sowie die Figuren 3 und 4 verdeutlichen die genannten Elemente bezüglich wesentlicher Details.

Der Koppelring 40 auf Seiten der Spindel 10 ist mit einem Innensechskant 41B versehen, über den ein Drehmoment in den Koppelring 40 einkoppelbar ist. Der Koppelring 40 ist an seinem distalen Ende weiterhin mit einem Bajonett 41C versehen. Dieses ist zum Zusammenwirken mit der Kopplungshülse 42 vorgesehen. Zu diesem Zweck weist die Kopplungshülse 42 an ihrem proximalen Ende ein korrespondierendes Bajonett 43C auf.

Korrespondierend zu dieser Bajonettkupplung 41C, 43C sind auch die Gewinde 52, 36 als Bajonettgewinde ausgebildet. Dies bedeutet, dass die Gewinde 52, 36 von Gewindegängen freie Winkelbereiche 52A, 36A aufweisen.

Die Bajonettkupplung 41C, 43C ist auf die Bajonettgewinde 52, 36 und deren von Gewindegängen freie Winkelbereiche 52A, 36A dahingehend angepasst, dass ein axiales Fügen der Bajonettkupplung 41C, 43C und der Bajonettgewinde 52, 36 in der jeweils gleichen Winkelstellung des Werkstückhalters 30 zum Verbund aus Koppelring 40 und Gewindehülse 50 möglich ist.

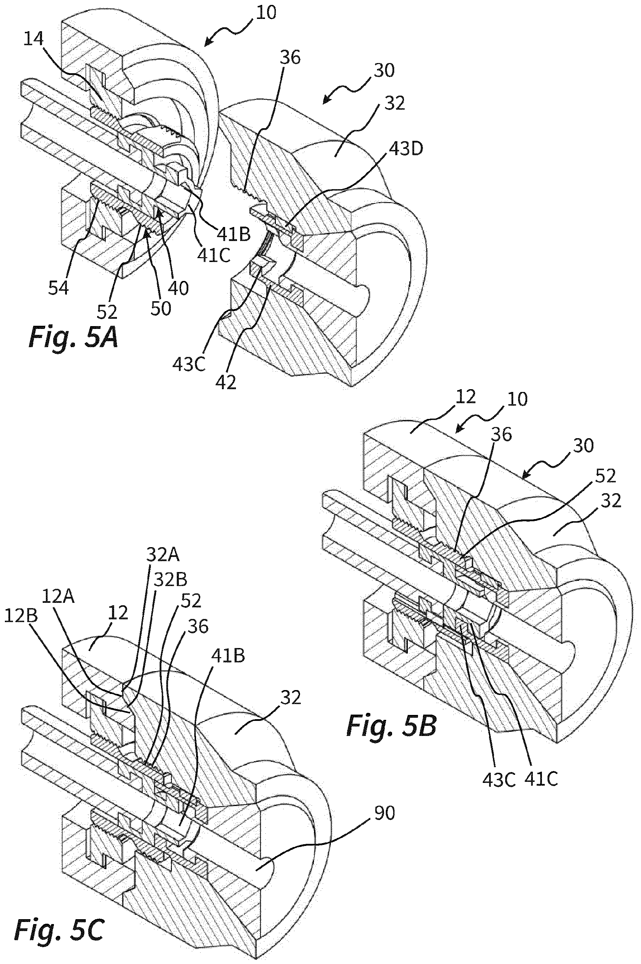

Der genannte Aufbau gestattet einen Kopplungsvorgang, der anhand der Fig. 5A bis 5C beschrieben ist.

Fig. 5A zeigt den ungekoppelten Zustand. Auf Seiten der Spindel 10 bilden das Bajonett 41C des Koppelrings 40 sowie die hiermit drehfest verbundene Differenzgewindehülse 50 den distalen Abschluss der Spindel 10. Mittels des Innensechskants 41B kann die Ausrichtung des Verbunds aus Koppelring 40 und Gewindehülse 50 in eine für die Ankopplung des Werkstückhalters 30 passende Ausrichtung gebracht werden. Die Gewindehülse 50 ist dauerhaft und somit bereits vor Kopplung mittels des Gewindes 52 und des Innengewindes 16 des Gewinderings 14 eingeschraubt.

In passender Ausrichtung können die Bajonette 41C, 43C als auch die Bajonettgewinde 52, 36 axial ineinandergeschoben zu werden. Fig. 5A zeigt bereits die eine passende Ausrichtung.

In dieser Ausrichtung wird der Werkstückhalter 30 nun auf die Spindel 10 aufgeschoben wie Fig. 5B verdeutlicht.

Anschließend wird durch den Aufnahmebereich 90 hindurch ein Sechskantschlüssel eingeschoben, der in den Innensechskant 41B greift. Durch Drehen dieses Sechskantschlüssels kann der Verbund aus Koppelring 40 und Gewindehülse 50 gegenüber dem Werkstückhalter 30 verdreht werden. Dies bewirkt zum einen, dass die Bajonette 41C, 43C miteinander derart verkoppelt werden, dass anschließend das Zugrohr 20 eine axiale Zugkraft über den Koppelring 40 und die Kopplungshülse 42 auf die Spannbacken 43 des Spannbackenrings 44 ausüben kann. Zum anderen bewirkt das Drehen des Sechskantschlüssels, dass die Gewinde 52, 36 zunächst in Eingriff miteinander kommen und anschließend das Spannfutter 32 des Werkstückhalters 30 an den Anschlussring 12 der Spindel 10 ziehen. Konische Zentrierungsflächen 12B, 32B am Anschlussring 12 und dem Spannfutter 32 gewährleisten dabei eine zentrierte Anbringung.

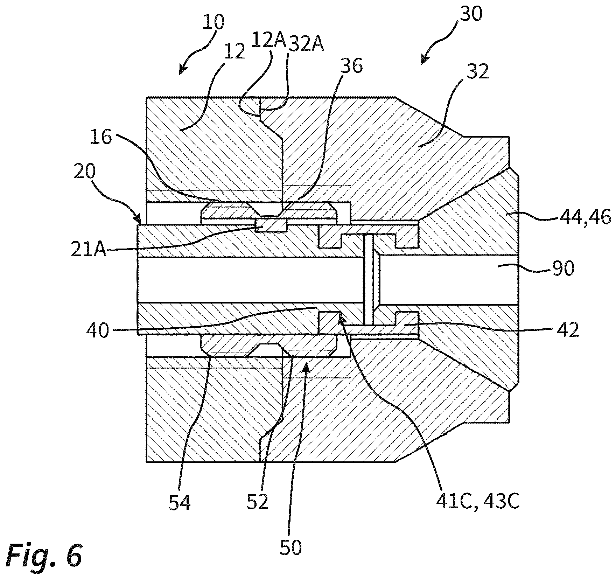

Fig. 6 zeigt eine erst alternative Bauweise, die sich bezüglich der nachfolgenden Aspekte von der Gestaltung der Fig. 1 bis 5C unterscheidet.

Die Bauweise der Fig. 6 unterscheidet sich von der Bauweise der Fig. 1 bis 5C dadurch, dass am Zugrohr 20 kein hierzu drehbarer Koppelring 40 vorgesehen ist. Stattdessen ist in nicht näher dargestellter Weise das distale Ende des Zugrohrs 20 selbst als Bajonett 21C vorgesehen, welches mit dem korrespondierenden Bajonett 43C der Kopplungshülse 42 in Eingriff gebracht werden kann. An der Außenseite des Zugrohrs 20 ist ein Nutenstein 21A vorgesehen, mittels dessen das Zugrohr 20 drehfest, jedoch axial beweglich, an die Gewindehülse 50 angekoppelt ist. Weiterhin ist abweichend zur Gestaltung der Fig. 1 bis 5C vorgesehen, dass das spindelseitige Gewinde 54 der Gewindehülse 50 unmittelbar in ein Innengewinde 16 des Anschlussrings 12 eingreift. Wie auch bei der Gestaltung der Fig. 1 bis 5C sind die Gewinde 52, 36 als Bajonettgewinde ausgebildet.

Da bei dieser Gestaltung der Koppelring 40 entfällt, ist auch kein Innensechskant vorgesehen. Um die zum Festlegen des Werkstückhalters 30 an der Spindel 10 erforderliche Drehbewegung der Gewindehülse 50 zu erzielen, wird stattdessen ein Kopplungsmoment unmittelbar über das Zugrohr 20 eingekoppelt. Das Zugrohr erfüllt somit eine Doppelfunkion: Im Zuge der Anbringung des Werkstückhalters 30 wird eine Drehbewegung des Zugrohrs verwendet, um über das Differentialgewinde das Spannfutter 32 an den Anschlussring 12 anzuziehen. Im Betrieb des Werkstückhalters wird eine translative Zugbewegung bezogen auf Fig. 6 nach links verwendet, um die Spannbacken 46 axial und dadurch mittelbar radial aufeinander zu zu verlagern und somit ein Werkstück im Aufnahmebereich 90 einzuspannen.

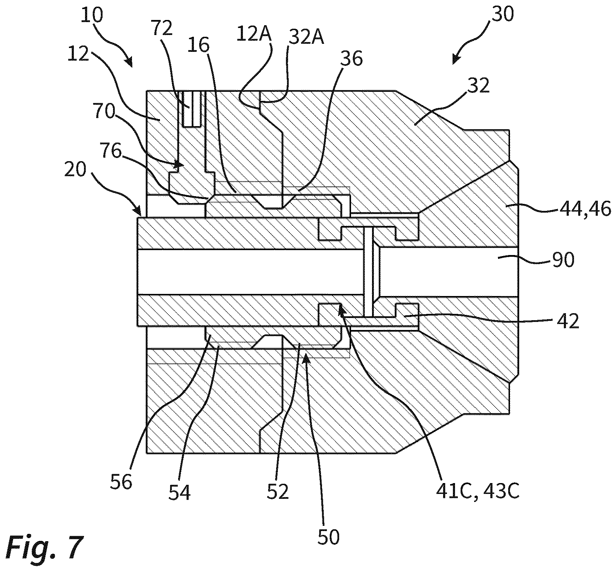

Fig. 7 zeigt eine zweite alternative Bauweise. Auch bei dieser ist wiederum das Zugrohr 20 selbst mit einem Bajonett 21C versehen und dafür ausgebildet, mit dem Bajonett 43C der Kopplungshülse 42 in Eingriff gebracht zu werden. Die Gewindehülse 50 ist entsprechend der Gestaltung der Fig. 6 mit seinem Gewinde 54 in Eingriff mit dem Anschlussring 12 und mit seinem Bajonettgewinde 52 im Eingriff mit dem Bajonettgewinde 36 des Spannfutter 32.

Abweichend von der Gestaltung der Fig. 6 ist jedoch vorgesehen, dass nach dem Ansetzen des Werkstückhalters 30 an die Spindel 10 und dem damit einhergehenden axialen Fügen der Bajonettkupplung 21C, 43C sowie der Bajonettgewinde 52, 36 die Gewindehülse 50 über ein radial erstrecktes und drehbares Spannglied 70 aufgebracht wird, welches in einer Durchbrechung des Anschlussrings 12 eingesetzt ist. Das Spannglied 70 weist außenseitig einen Innensechskant 72 auf. Innenseitig ist das Ende des Spanngliedes 70 durch eine Kegelverzahnung 76 gebildet, die mit einer korrespondierenden Kegelverzahnung 56 der Gewindehülse 50 kämmt.

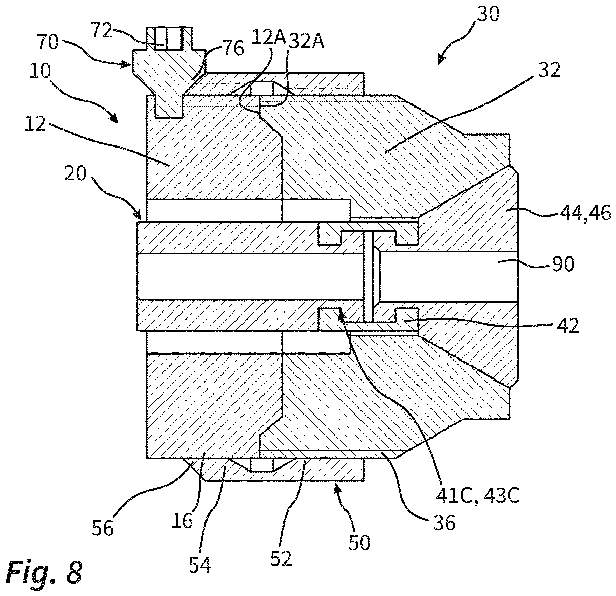

Fig. 8 zeigt eine dritte alternative Bauweise. Wie auch bei der Bauweise der Fig. 7 ist hier vorgesehen, dass die Gewindehülse weder axial durch den Aufnahmebereich 90 noch durch das Zugrohr 20 aufgebracht wird, sondern durch ein radial ausgerichtetes und drehbares Spannglied, welches mit einer Kegelverzahnung 56, 76 mit der Gewindehülse 50 kämmt.

Die Besonderheit der Gestaltung der Fig. 8 liegt insbesondere darin, dass die Gewindehülse 50 als außenseitige Gewindehülse 50 ausgebildet ist. Die Gewinde 52, 54 sind daher als Innengewinde ausgebildet, wobei das Gewinde 54 in diesem Fall mit einem als Außengewinde ausgestalteten Gegengewinde 16 im Eingriff steht und wobei das Bajonettgewinde 52 mit einem ebenfalls als Außengewinde ausgestalteten Bajonettgewinde 36 an der Außenseite des Spannfutter32 im Eingriff steht.

## Patentansprüche

1. Spannsystem mit einer Spindel (10) und einem Werkstückhalter (30), insbesondere zur rotativen Bearbeitung eines durch den Werkstückhalter (30) gehaltenen Werkstücks, mit den folgenden Merkmalen:
a. der Werkstückhalter (30) weist einen Aufnahmebereich (90) zur Aufnahme eines Werkstücks auf, und
b. die Spindel (10) ist zur Anbringung des Werkstückhalters (30) ausgebildet, wobei die Spindel und der Werkstückhalter über aufeinander zu gerichtete Anlageflächen (12A, 12B, 32A, 32B) verfügen,
**gekennzeichnet durch** die folgenden Merkmale:
c. zur Befestigung des Werkstückhalters (30) an der Spindel (10) ist eine Differenzgewindehülse (50) mit einem ersten Gewindeabschnitt (52) und einem zweiten Gewindeabschnitt (54) mit unterschiedlicher Gewindesteigung vorgesehen, und
d. am Werkstückhalter (30) ist ein erstes Gegengewinde (36) für den ersten Gewindeabschnitt vorgesehen (52), und
e. an der Spindel (10) ist ein zweites Gegengewinde (16) für den zweiten Gewindeabschnitt (54) vorgesehen.

2. Spannsystem nach Anspruch 1 mit dem folgenden weiteren Merkmal:
a. das erste Gegengewinde (36) und der erste Gewindeabschnitt (52) sind als Bajonettgewinde (36, 52) ausgebildet und weisen hierzu jeweils mindestens einen gewindeganglosen Winkelbereich (36A, 52A) im Bereich des ersten Gegengewindes (36) und des ersten Gewindeabschnitts (52) auf.

3. Spannsystem nach Anspruch 1 oder 2 mit dem folgenden weiteren Merkmal:
a. mindestens eines der Gegengewinde (16, 36) der Spindel (10) und/oder des Werkstückhalters (30) ist verschieblich zur Anlagefläche (12A, 12B, 32A, 32B) der Spindel (10) bzw. des Werkstückhalters (30) ausgebildet,
vorzugsweise mit dem folgenden zusätzlichen Merkmal:
b. das erste oder das zweite Gegengewinde (16, 36) ist an einem Gewindering (14), der an der Spindel (10) begrenzt beweglich gegenüber der Anlagefläche (12A, 12B) der Spindel (10) vorgesehen ist bzw. die am Werkstückhalter (30) begrenzt beweglich gegenüber der Anlagefläche (32A, 32B) des Werkstückhalters (30) vorgesehen ist.

4. Spannsystem nach einem der vorstehenden Ansprüche mit den folgenden weiteren Merkmalen:
a. der Werkstückhalter (30) weist mindestens ein Klemmelement (46) auf, das gegenüber der Anlagefläche (32A, 32B) des Werkstückhalters (30) verlagerbar ist, und
b. zur Verlagerung des mindestens einen Klemmelements (46) weist der Werkstückhalter ein Krafteinkopplungsglied (42) auf.

5. Spannsystem nach Anspruch 4 mit den folgenden weiteren Merkmalen:
a. das Krafteinkopplungsglied (42) weist auf seiner zur Spindel (10) hin weisenden Seite eine Bajonettkupplung (43C) auf, und
b. an der Spindel (10) ist ein korrespondierendes Kopplungsglied (40) mit Bajonettkupplung (21C, 41C) zur Ankopplung an das Krafteinkopplungsglied (42) vorgesehen.

6. Spannsystem nach Anspruch 5 mit dem folgenden weiteren Merkmal:
a. die Bajonettkupplungen (21C, 41C, 43C) sind auf die Bajonettgewinde (36,52) dahingehend abgestimmt, dass in einer Kopplungsausrichtung des Werkstückhalters dieser an die Spindel ansetzbar ist, wobei gleichzeitig die Bajonettgewinde (36, 52) und die Bajonettkupplungen (41C, 43C) in Eingriff miteinander gelangen.

7. Spannsystem nach Anspruch 5 oder 6 mit dem folgenden weiteren Merkmal:
a. das Kopplungsglied (40) ist axial beweglich und drehfest an der Gewindehülse (50) gelagert.

8. Spannsystem nach Anspruch 7 mit dem folgenden weiteren Merkmal:
a. das Kopplungsglied (40) ist drehfest mit einem Kraftübertragungsorgan (20) der Spindel (10) verbunden, so dass durch Drehen des Kraftübertragungsorgans (20) das Kopplungsglied (40) und mittelbar die Gewindehülse (50) gegenüber der Spindel (10) verdrehbar ist.

9. Spannsystem nach Anspruch 7 mit dem folgenden weiteren Merkmal:
a. das Kopplungsglied (40) ist drehbar mit einem Kraftübertragungsorgan (20) der Spindel (10) verbunden,
vorzugsweise mit dem folgenden zusätzlichen Merkmal:
b. das Kopplungsglied (40) verfügt über einen Innensechskant (41B) oder eine anderweitige unrunde Momenteneinkopplungskontur, um es gemeinsam mit der Gewindehülse (50) gegenüber der Spindel (10) drehen zu können.

10. Spannsystem nach einem der Ansprüche 1 bis 6 mit den folgenden weiteren Merkmalen:
a. die Gewindehülse (50) verfügt über eine Verzahnung (56), die mit einem Zahnrad (76), insbesondere einem Kegelrad (76), oder mit einer Schnecke eines Spanngliedes (70) in Eingriff steht, und
b. das Spannglied (70) ist von außen zum Spannen zugänglich, wobei insbesondere ein Außen- oder Innensechskant (72) zum Ansetzen eines Werkzeugs vorgesehen ist.

11. Spannsystem nach einem der vorstehenden Ansprüche mit dem folgenden weiteren Merkmal:
a. es ist eine Blockiereinrichtung zur formschlüssigen rotativen Sicherung der Gewindehülse (50) an der Spindel (10) und/oder am Werkstückhalter (30) vorgesehen.

12. Spannsystem nach einem der vorstehenden Ansprüche mit einem der folgenden weiteren Merkmale:
a. die Gewindehülse (50) ist als Außenhülse mit zwei Innengewinden (52, 54) ausgebildet, oder
b. die Gewindehülse (50) ist als Innenhülse mit zwei Außengewinden (52, 54) ausgebildet, oder
c. die Gewindehülse weist ein Außengewinde und ein Innengewinde auf.

13. Verfahren zur Kopplung eines Spannsystems nach einem der vorstehenden Ansprüche, mittels dessen der Werkstückhalter an der Spindel befestigt wird, mit den folgenden Schritten:
a. der Werkstückhalter (30) wird in Richtung einer Haupterstreckungsrichtung (2) auf die Spindel (10) aufgeschoben, und
b. der Werkstückhalter (30) wird gegenüber der Spindel um die Haupterstreckungsrichtung (2) verdreht, um hierdurch mindestes eine Bajonettkupplung (21C, 41C, 43C) sowie mindestens zwei Bajonettgewinde (52, 36) in Eingriff zu bringen, und
c. die Differenzgewindehülse (50) wird gegenüber Anlageflächen (12A, 12B, 32A, 32B) der Spindel (10) und des Werkstückhalters (30) verdreht, um die Anlageflächen (12A, 12B, 32A, 32B) aneinander anzupressen.

14. Verfahren nach Anspruch 13 mit dem folgenden weiteren Merkmal:
a. das Verdrehen der Differenzgewindehülse (50) erfolgt, während der Werkstückhalter (30) mittels eines Kraftübertragungsorgan (20) an die Spindel (10) angepresst wird,
vorzugsweise mit dem zusätzlichen Merkmal:
b. das Verdrehen der Differenzgewindehülse (50) erfolgt mittels eines durch das Kraftübertragungsorgan (20) aufgebrachten Befestigungsmoments.

## Claims

1. Clamping system having a spindle (10) and having a workpiece holder (30), in particular for rotational machining of a workpiece held by the workpiece holder (30), having the following features:
a. the workpiece holder (30) has a receiving region (90) for receiving a workpiece, and
b. the spindle (10) is configured for attachment of the workpiece holder (30), wherein the spindle and the workpiece holder have abutment surfaces (12A, 12B, 32A, 32B) which are directed towards one another,
**characterized by** the following features:
c. for fastening of the workpiece holder (30) to the spindle (10), provision is made of a differentially threaded sleeve (50) having a first threaded portion (52) and having a second threaded portion (54) with a different thread pitch, and
d. provision is made on the workpiece holder (30) of a first counterpart thread (36) for the first threaded portion (52), and
e. provision is made on the spindle (10) of a second counterpart thread (16) for the second threaded portion (54).

2. Clamping system according to Claim 1, having the following further feature:
a. the first counterpart thread (36) and the first threaded portion (52) are in the form of bayonet threads (36, 52) and, for this purpose, respectively have at least one thread-free angle range (36A, 52A) in the region of the first counterpart thread (36) and of the first threaded portion (52).

3. Clamping system according to Claim 1 or 2, having the following further feature:
a. at least one of the counterpart threads (16, 36) of the spindle (10) and/or of the workpiece holder (30) is formed so as to be displaceable with respect to the abutment surface (12A, 12B, 32A, 32B) of the spindle (10) or of the workpiece holder (30),
preferably having the following additional feature:
b. the first or the second counterpart thread (16, 36) is on a threaded ring (14) which is provided on the spindle (10) so as to be movable to a limited extent in relation to the abutment surface (12A, 12B) of the spindle (10) or which is provided on the workpiece holder (30) so as to be movable to a limited extent in relation to the abutment surface (32A, 32B) of the workpiece holder (30).

4. Clamping system according to one of the preceding claims, having the following further features:
a. the workpiece holder (30) has at least one clamping element (46) which is displaceable in relation to the abutment surface (32A, 32B) of the workpiece holder (30), and
b. the workpiece holder has a force-coupling-in member (42) for displacement of the at least one clamping element (46).

5. Clamping system according to Claim 4, having the following further features:
a. the force-coupling-in member (42) has a bayonet coupling (43C) on its side facing towards the spindle (10), and
b. provision is made on the spindle (10) of a corresponding coupling member (40) with a bayonet coupling (21C, 41C) for coupling to the force-coupling-in member (42).

6. Clamping system according to Claim 5, having the following further feature:
a. the bayonet couplings (21C, 41C, 43C) are matched to the bayonet threads (36, 52) such that, in a coupling orientation of the workpiece holder, the latter is attachable to the spindle, wherein the bayonet threads (36, 52) and the bayonet couplings (41C, 43C) come into engagement with one another at the same time.

7. Clamping system according to Claim 5 or 6, having the following further feature:
a. the coupling member (40) is mounted in an axially movable and rotationally conjoint manner on the threaded sleeve (50).

8. Clamping system according to Claim 7, having the following further feature:
a. the coupling member (40) is connected in a rotationally conjoint manner to a force-transmission member (20) of the spindle (10), with the result that the coupling member (40), and indirectly the threaded sleeve (50), is rotatable in relation to the spindle (10) by way of rotation of the force-transmission member (20).

9. Clamping system according to Claim 7, having the following further feature:
a. the coupling member (40) is rotatably connected to a force-transmission member (20) of the spindle (10),
preferably having the following additional feature:
b. the coupling member (40) has an internal hexagon (41B) or some other non-round torque-coupling-in contour in order to allow rotation of it together with the threaded sleeve (50) in relation to the spindle (10).

10. Clamping system according to one of Claims 1 to 6, having the following further features:
a. the threaded sleeve (50) has a toothing (56) which is in engagement with a gearwheel (76), in particular a bevel gear (76), or with a screw of a clamping member (70), and
b. the clamping member (70) is externally accessible for clamping purposes, wherein provision is made in particular of an external or internal hexagon (72) for attachment of a tool.

11. Clamping system according to one of the preceding claims, having the following further feature:
a. provision is made of a blocking device for form-fitting rotational securing of the threaded sleeve (50) to the spindle (10) and/or to the workpiece holder (30).

12. Clamping system according to one of the preceding claims, having one of the following further features:
a. the threaded sleeve (50) is in the form of an external sleeve with two internal threads (52, 54), or
b. the threaded sleeve (50) is in the form of an internal sleeve with two external threads (52, 54), or
c. the threaded sleeve has one external thread and one internal thread.

13. Method for coupling of a clamping system according to one of the preceding claims, by means of which the workpiece holder is fastened to the spindle, comprising the following steps:
a. pushing the workpiece holder (30) onto the spindle (10) in the direction of a main extent direction (2), and
b. rotating the workpiece holder (30) about the main extent direction (2) in relation to the spindle in order, in this way, for at least one bayonet coupling (21C, 41C, 43C) and at least two bayonet threads (52, 36) to be brought into engagement, and
c. rotating the differentially threaded sleeve (50) in relation to abutment surfaces (12A, 12B, 32A, 32B) of the spindle (10) and of the workpiece holder (30) in order for the abutment surfaces (12A, 12B, 32A, 32B) to be pressed against one another.

14. Method according to Claim 13, having the following further feature:
a. the rotation of the differentially threaded sleeve (50) takes place while the workpiece holder (30) is being pressed by means of a force-transmission member (20) against the spindle (10),
preferably having the additional feature:
b. the rotation of the differentially threaded sleeve (50) takes place by means of a fastening torque applied by the force-transmission member (20).

## Revendications

1. Système de serrage comprenant une broche (10) et un porte-pièce (30), en particulier pour l'usinage rotatif d'une pièce maintenue par le porte-pièce (30), présentant les caractéristiques suivantes :
a. le porte-pièce (30) présente une région de réception (90) servant à la réception d'une pièce, et
b. la broche (10) est réalisée pour le montage du porte-pièce (30), la broche et le porte-pièce possédant des surfaces d'appui (12A, 12B, 32A, 32B) orientées les unes vers les autres,
**caractérisé par** les caractéristiques suivantes :
c. une douille à filetage différentiel (50) dotée d'une première partie filetée (52) et d'une deuxième partie filetée (54) de pas de filetage différents est prévue pour la fixation du porte-pièce (30) à la broche (10), et
d. un premier contre-filetage (36) pour la première partie filetée (52) est prévu sur le porte pièce (30), et
e. un deuxième contre-filetage (16) pour la deuxième partie filetée (54) est prévu sur la broche (10).

2. Système de serrage selon la revendication 1 présentant les autres caractéristiques suivantes :
a. le premier contre-filetage (36) et la première partie filetée (52) sont réalisés sous forme de filetage à baïonnette (36, 52) et présentent à cet effet respectivement au moins une région angulaire (36A, 52A) sans filet dans la région du premier contre-filetage (36) et de la première partie filetée (52).

3. Système de serrage selon la revendication 1 ou 2 présentant les autres caractéristiques suivantes :
a. au moins l'un des contre-filetages (16, 36) de la broche (10) et/ou du porte-pièce (30) est réalisé de manière mobile par rapport à la surface d'appui (12A, 12B, 32A, 32B) de la broche (10) ou du porte-pièce (30),
de préférence présentant la caractéristique supplémentaire suivante :
b. le premier ou le deuxième contre-filetage (16, 36) est prévu sur une bague filetée (14), qui est prévue sur la broche (10) de manière déplaçable de façon limitée par rapport à la surface d'appui (12A, 12B) de la broche (10) ou qui est prévue sur le porte-pièce (30) de manière déplaçable de façon limitée par rapport à la surface d'appui (32A, 32B) du porte-pièce (30).

4. Système de serrage selon l'une des revendications précédentes présentant les autres caractéristiques suivantes :
a. le porte-pièce (30) présente au moins un élément de serrage (46) qui peut être décalé par rapport à la surface d'appui (32A, 32B) du porte-pièce (30), et
b. le porte-pièce présente un organe d'introduction de force (42) pour le décalage de l'au moins un élément de serrage (46).

5. Système de serrage selon la revendication 4 présentant les autres caractéristiques suivantes :
a. l'organe d'introduction de force (42) présente, sur son côté tourné vers la broche (10), un raccord à baïonnette (43C), et
b. un organe d'accouplement correspondant (40) doté d'un raccord à baïonnette (21C, 41C) pour l'accouplement à l'organe d'introduction de force (42) est prévu sur la broche (10).

6. Système de serrage selon la revendication 5 présentant l'autre caractéristique suivante :
a. les raccords à baïonnette (21C, 41C, 43C) sont adaptés au filetage à baïonnette (36, 52) de telle sorte que, dans une orientation d'accouplement du porte-pièce, celui-ci peut être placé sur la broche, le filetage à baïonnette (36, 52) et les raccords à baïonnette (41C, 43C) venant en prise les uns avec les autres simultanément.

7. Système de serrage selon la revendication 5 ou 6 présentant l'autre caractéristique suivante :
a. l'organe d'accouplement (40) est monté de manière axialement déplaçable et solidaire en rotation sur la douille filetée (50).

8. Système de serrage selon la revendication 7 présentant l'autre caractéristique suivante :
a. l'organe d'accouplement (40) est relié de manière solidaire en rotation à un organe de transmission de force (20) de la broche (10), de sorte que, par rotation de l'organe de transmission de force (20), l'organe d'accouplement (40) et indirectement la douille filetée (50) puissent tourner par rapport à la broche (10).

9. Système de serrage selon la revendication 7 présentant l'autre caractéristique suivante :
a. l'organe d'accouplement (40) est relié de manière rotative à un organe de transmission de force (20) de la broche (10),
de préférence présentant la caractéristique supplémentaire suivante :
b. l'organe d'accouplement (40) possède un six pans creux (41B) ou un autre contour irrégulier d'introduction de couple, afin de pouvoir le faire tourner conjointement avec la douille filetée (50) par rapport à la broche (10).

10. Système de serrage selon l'une des revendications 1 à 6 présentant les autres caractéristiques suivantes :
a. la douille filetée (50) possède une denture (56), qui est en prise avec une roue dentée (76), en particulier une roue conique (76), ou avec une vis sans fin d'un organe de serrage (70), et
b. l'organe de serrage (70) est accessible depuis l'extérieur pour le serrage, un six pans extérieur ou un six pans creux (72) étant en particulier prévu pour le placement d'un outil.

11. Système de serrage selon l'une des revendications précédentes présentant l'autre caractéristique suivante :
a. un dispositif de blocage servant à la fixation rotative par complémentarité de formes de la douille filetée (50) sur la broche (10) et/ou sur le porte-pièce (30) est prévu.

12. Système de serrage selon l'une des revendications précédentes présentant l'une des autres caractéristiques suivantes :
a. la douille filetée (50) est réalisée sous forme de douille extérieure dotée de deux filetages intérieurs (52, 54), ou
b. la douille filetée (50) est réalisée sous forme de douille intérieure dotée de deux filetages extérieurs (52, 54), ou
c. la douille filetée présente un filetage extérieur et un filetage intérieur.

13. Procédé d'accouplement d'un système de serrage selon l'une des revendications précédentes, au moyen duquel le porte-pièce est fixé à la broche, présentant les étapes suivantes :
a. le porte-pièce (30) est enfilé sur la broche (10) dans la direction d'une direction d'étendue principale (2), et
b. le porte-pièce (30) est tourné par rapport à la broche autour de la direction d'étendue principale (2), afin d'amener ainsi en prise au moins un raccord à baïonnette (21C, 41C, 43C) ainsi qu'au moins deux filetages à baïonnette (52, 36), et
c. la douille à filetage différentiel (50) est tournée par rapport à des surfaces d'appui (12A, 12B, 32A, 32B) de la broche (10) et du porte-pièce (30), afin de presser les surfaces d'appui (12A, 12B, 32A, 32B) les unes contre les autres.

14. Procédé selon la revendication 13 présentant l'autre caractéristique suivante :
a. la rotation de la douille à filetage différentiel (50) s'effectue pendant que le porte-pièce (30) est pressé sur la broche (10) au moyen d'un organe de transmission de force (20),
de préférence présentant la caractéristique supplémentaire :
b. la rotation de la douille à filetage différentiel (50) s'effectue au moyen d'un moment de fixation appliqué par l'organe de transmission de force (20).
